# EUROPEAN PATENT APPLICATION

(11) **EP 2 075 197 A1**
(43) Date of publication of application: **01.07.2009**
(21) Application number: 08012337.5
(22) Date of filing: 08.07.2008
(51) Int. Cl.: B65D 5/42, H01M 2/10

(54) **Packing box with power charging arrangement**

(30) Priority: 31.12.2007 TW 96222675 U
(71) Applicant: J.D Components Co., Ltd., Shou Shui Hsiang, Chang Hua Hsien (TW)
(72) Inventor: Miao, Lin, Shou Shui Hsiang Chang Hua Hsien (TW)
(74) Representative: Becker Kurig Straus

(57) **Abstract**

A packing box (10) is disclosed having an opening (11) in one wall panel thereof and a battery holder (16) formed therein or detachably mounted therein for holding a rechargeable battery (15) having a charging interface (151) to have the charging interface (151) of the rechargeable battery (15) face the opening (11) so that an external charging cable (30) can be inserted through the opening (11) to charge the charging interface (151) of the rechargeable battery (15) with external power supply when the product is maintained packed in the packing box (10).

## Description

### BACKGROUND OF THE INVENTION

### 1. Field of the Invention

The present invention relates to packing boxes and more particularly, to such a packing box, which allows a person to charge the battery of the packed item with an external charging cable without opening the packing box.

### 2. Description of the Related Art

In a factory for electronic products, every electronic product must be well packed in a packing box for delivery. A packing box protects the packed electronic product, and keeps the related accessories (battery, cables, etc.) of the electronic product in place.

When the battery of the packed electronic product has to be charged with an external power supply, the operator must open the packing box and unpack the packed accessories so that the battery can be charged with external power supply. After charging, the electronic product and the related accessories must be packed in the packing box and the packing box must be sealed again. This procedure is complicated. When the accessories are taken out of the packing box and unpacked, much floor space is required to the unpacked accessories. During unpacking and packing procedures, small accessories may be missed. Further, when removing a heavy product, for example, electricity-assisted bicycle from the packing box, much effort is necessary, bringing inconvenience to the operator.

### SUMMARY OF THE INVENTION

The present invention has been accomplished under the circumstances in view. It is the main object of the present invention to provide a packing box, which allows a person to charge the battery of the packed item with an external charging cable without opening the packing box.

To achieve this and other objects of the present invention, the packing box comprises an opening in one wall panel thereof, and a battery holder mounted therein for holding a rechargeable battery having a charging interface. When packing a product in the packing box, the rechargeable battery of the product is inserted into the battery holder, and the charging interface of the rechargeable battery is kept facing the opening. Therefore, an external charging cable can be directly inserted through the opening to charge the charging interface of the rechargeable battery with external power supply without opening the packing box.

Further, the packing box can be provided with a cover for closing/opening the opening.

Further, the cover can be hinged to the wall panel of the packing box in which the opening is formed.

Alternatively, the cover can be a sliding cover slidably coupled to two sliding grooves on the corresponding wall panel of the packing box. The sliding grooves can be formed in the corresponding wall panel of the packing box at top and bottom sides relative to the opening, or at two opposite lateral sides relative to the opening.

Further, the opening can be formed in one lateral wall panel or the top wall panel of the packing box.

Further, the packing box can be configured to pack an electricity-assisted bicycle. In this case, the battery holder is configured subject to a rechargeable battery for electricity-assisted bicycle.

### BRIEF DESCRIPTION OF THE DRAWING

FIG 1 illustrates an exploded view of a packing box in accordance with the present invention.
FIG 2 shows the packing box packed and the cover opened from the opening of the packing box for the insertion of a charging cable according to the present invention.

### DETAILED DESCRIPTION OF THE INVENTION

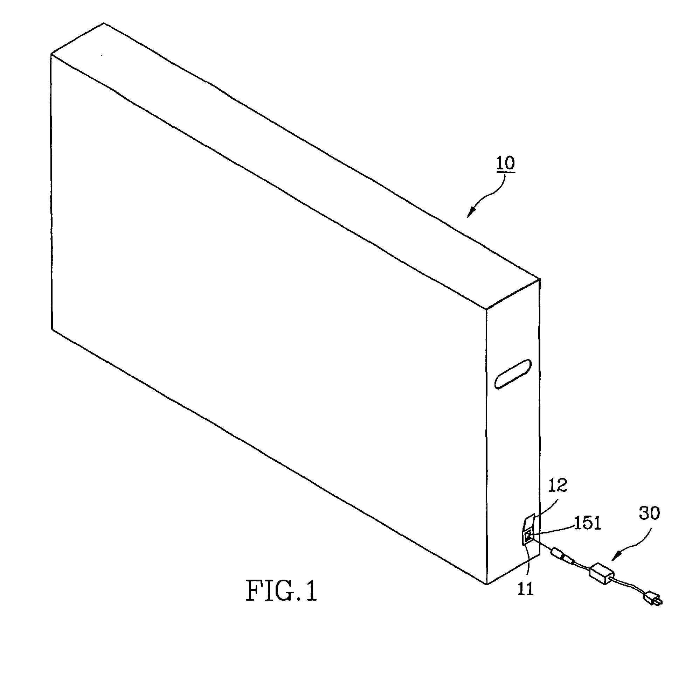

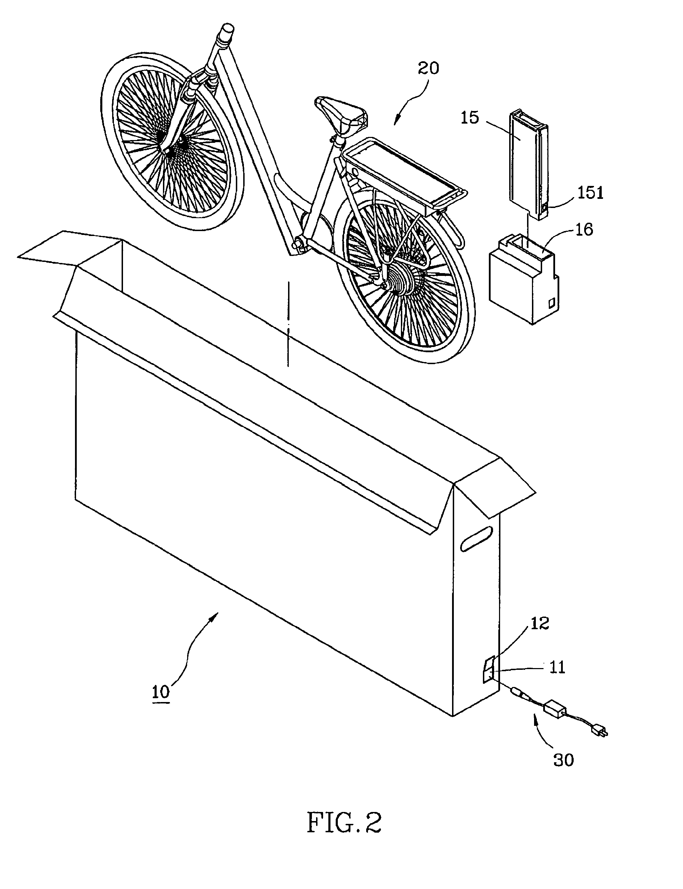

Referring to FIGS. 1 and 2, a packing box **10** is shown having an opening **11** cut through one wall panel thereof, a battery holder **16** fixedly mounted therein corresponding to the opening **11** to accommodate a battery **15** that has a charging interface **151** facing the opening **11.**

According to the present preferred embodiment, a cover **12** is hinged to the packing box **10** and adapted to close the opening **11.** The battery holder **16** is configured to accommodate a rechargeable battery **15** for electricity-assisted bicycle. Further, the opening **11** can be formed in one lateral wall panel or top panel of the packing box **10.**

According to the present preferred embodiment, the cover **12** is hinged to the packing box **10** and adapted to close the opening **11.** Alternatively, the cover **12** can be a sliding design slidably coupled to two parallel sliding grooves on the wall panel of the packing box **10** in which the opening is formed and movable between a close position to close the opening **11** and an open position to open the opening **11.** The two parallel sliding grooves can be horizontal sliding grooves formed on the wall panel of the packing box **10** at the top and bottom sides relative to the opening **11**. Alternatively, the two parallel sliding grooves can be vertical sliding grooves formed on the wall panel of the packing box **10** at the top and bottom sides relative to the opening **11** or at two opposite lateral sides relative to the opening **11.**

According to the present preferred embodiment, the packing box **10** is adapted to pack an electricity-assisted bicycle. However, the invention can be made to pack an electronic device, for example, cell phone, PDA, satellite navigation device, etc.

Referring to FIG. 2 again, when an electricity-assisted bicycle **20** is packed in the packing box **10**, the rechargeable battery **15** of the electricity-assisted bicycle **20** is inserted into the battery holder **16**. At this time, the cover **12** can be opened from the opening **11** for enabling a charging cable **30** to be inserted through the opening **11** and electrically connected to the charging interface **151** to charge the rechargeable battery **15** with external power supply. Therefore, the user needs not to open the packing box **10** when charging the rechargeable battery **15.** Therefore, the invention allows the rechargeable battery **15** of the electricity-assisted bicycle **20** packed in the packing box **10** to be conveniently charged with external power supply conveniently.

Alternatively, a foam material that defines an accommodation chamber can be inserted into the inside of the packing box **10** to substitute for the aforesaid battery holder **16** for accommodating the rechargeable battery **15** of the electricity-assisted bicycle **20** that is packed in the packing box **10**, achieving the same effect.

## Claims

1. A packing box (10) being **characterized in that** comprises an opening (11) in one wall panel thereof, and battery holder means (16) mounted therein corresponding to said opening (11) and adapted for holding a rechargeable battery (15) having a charging interface (151) such that the charging interface (151) of the rechargeable battery (15) faces said opening (11).

2. The packing box (10) as claimed in claim 1, further comprising a cover (12) movable to close/open said opening (11).

3. The packing box (10) as claimed in claim 2, wherein said cover (12) is hinged the wall panel of the packing box (10) in which said opening (11) is formed

4. The packing box (10) as claimed in claim 2, wherein said cover (12) is slidably coupled to the wall panel of the packing box (10) in which said opening (11) is formed.

5. The packing box (10) as claimed in claim 4, wherein the wall panel of the packing box (10) in which said opening (11) is formed has two sliding grooves disposed at top and bottom sides relative to said opening (11), and said cover (12) is slidably coupled to the sliding grooves of the wall panel of the packing box (10) in which said opening (11) is formed.

6. The packing box (10) as claimed in claim 4, wherein the wall panel of the packing box (10) in which said opening (11) is formed has two sliding grooves disposed at two opposite lateral sides relative to said opening (11), and said cover (12) is slidably coupled to the sliding grooves of the wall panel of the packing box (10) in which said opening (11) is formed.

7. The packing box (10) as claimed in claim 1, wherein said opening (11) is formed in a top wall panel of the packing box (10).

8. The packing box (10) as claimed in claim 1, wherein said opening (11) is formed in one lateral wall panel of the packing box (10).

9. The packing box (10) as claimed in claim 1, wherein said battery holder means (16) is configured subject to the configuration of the rechargeable battery (15) for electricity-assisted bicycle.
